# EUROPEAN PATENT APPLICATION

(11) **EP 3 882 608 A1**
(43) Date of publication of application: **22.09.2021**
(21) Application number: 19884353.4
(22) Date of filing: 29.08.2019
(51) Int. Cl.: G01N 21/64, G02B 21/00, G02B 21/06, G02B 21/02, G01N 21/25, G01N 21/45

(54) **COMPOUND MICROSCOPE SYSTEM**

(30) Priority: 12.11.2018 KR 20180138308
(71) Applicant: Korea Basic Science Institute, Daejeon 34133 (KR)
(72) Inventor: LEE, Kye Sung, Daejeon 34127 (KR); CHANG, Ki Soo, Daejeon 34070 (KR)
(74) Representative: Yamankaradeniz, Kemal
(86) International application number: PCT/KR2019/011052
(87) International publication number: WO 2020/101157

(57) **Abstract**

A compound microscope system, according to one embodiment, may comprise: a sample holder for supporting a sample; an optical interference microscope module for transferring a broadband light towards the sample and a reference mirror, and forming a tomographic image of the sample on the basis of a spectrum image formed by the mutual interference between lights reflected from the sample and the reference mirror; and a nonlinear microscope module for forming a nonlinear image of the sample by irradiating a laser pulse towards the sample, and then measuring an excitation light comprising excited multiphoton.

## Description

### TECHNICAL FIELD

The following description relates to a dual mode microscope system.

### BACKGROUND ART

A nonlinear microscope or a multiphoton microscope, which is a microscope that allows to view a three-dimensional image with excellent resolution by using fluorescence emitted by a material by means of stimulation of a light, may detect a nonlinear light generated by nonlinear optical interaction between a light irradiated onto a sample and an internal material of the sample, and thus there is a characteristic of being capable of imaging a shape and a structure of the sample without an additional fluorescent label.

The nonlinear microscope is effective for observing cellular tissues in a biological material, however, due to a transmission depth that is determined depending on a wavelength of a laser pulse irradiated onto a biological sample, and a light-emitting wavelength band that varies depending on a type of the biological material, the nonlinear microscope is mainly used to perform imaging of specific biological components of the biological sample.

Accordingly, in order to more effectively analyze a structure of the biological sample and a cell behavior, it may be effective to jointly use a microscope or an imaging device capable of observing a cell structure in a wider area in real time as well as imaging of a specific cell tissue.

The above-described background technology is possessed or acquired by the inventor in a derivation process of the present invention, and is not necessarily a known technology disclosed to the general public prior to filing of the present application.

### DISCLOSURE OF INVENTION

### Technical Subject

An aspect provides a dual mode microscope system.

### Technical Solutions

According to an aspect, there is provided a dual mode microscope system including a sample holder configured to support a sample, an optical coherence microscope module configured to transfer a broadband light toward the sample and a reference mirror, and to form a tomographic image of the sample based on a spectrum image formed by mutual coherence between lights reflected from the sample and the reference mirror, and a nonlinear microscope module configured to form a nonlinear image of the sample by irradiating a laser pulse toward the sample, and then measuring a light generated through a multiphoton excitation phenomenon.

At least a part of a broadband light irradiated by the optical coherence microscope module toward the sample and at least a part of a laser pulse irradiated by the nonlinear microscope module toward the sample may be irradiated onto the sample along a same path.

The optical coherence microscope module and the nonlinear microscope module may share one objective lens.

The sample holder may be installed between the optical coherence microscope module and the nonlinear microscope module, so that a light emitted from the optical coherence microscope module may be irradiated onto one surface of the sample holder, and a light emitted from the nonlinear microscope module may be irradiated onto the other surface of the sample holder.

The sample holder may be movable toward three axes between the optical coherence microscope module and the nonlinear microscope module.

The optical coherence microscope module may include a first light source configured to emit a broadband light, a sample irradiator configured to irradiate a part of a broadband light emitted from the first light source toward the sample, and to receive a light reflected from the sample, a reference unit configured to reflect a remaining part of a broadband light emitted from the first light source, and a spectrometer configured to measure a spectrum image formed, after the broadband light is transferred to the sample irradiator and the reference unit, by mutual coherence of a light reflected from each, and the nonlinear microscope module may include a second light source configured to emit a laser pulse, a first wavelength separation element installed on an optical axis of the broadband light irradiated from the sample irradiator toward the sample, the first wavelength separation element configured to reflect at least a part of a laser pulse emitted from the second light source toward the sample holder by reflecting a component of a light having a first setting wavelength or more, and transmitting a component of a light having less than the first setting wavelength, and to transmit at least a part of a light reflected after being irradiated onto the sample, and a photon measurement unit configured to measure a light generated through a multiphoton excitation phenomenon by a laser pulse irradiated onto the sample.

The dual mode microscope system according to an aspect may further include a controller configured to form an optical coherence tomographic image of the sample through a spectrum image measured by the spectrometer, and to form a nonlinear image of the sample through a light measured by the photon measurement unit, and the controller may sense a locally refracted portion of the optical coherence tomographic image of the sample by heating the sample through a laser pulse emitted from the second light source to sense relative positions of optical axes of a broadband light and a laser pulse irradiated toward the sample.

The sample irradiator may include a first beam scanner configured to adjust a position of the optical axis of the broadband light irradiated toward the sample, and the nonlinear microscope module may further include a second beam scanner configured to adjust a position of the optical axis of the laser pulse irradiated toward the sample, and the controller may drive, based on a relative position between central coordinates of the optical coherence tomographic image of the sample and coordinates of a specific portion where the optical coherence tomographic image is locally refracted, at least one scanner of the first beam scanner and the second beam scanner to align an optical axis of a broadband light and an optical axis of a laser pulse irradiated toward the sample.

The reference unit may include a beam splitter configured to reflect at least a part of a broadband light irradiated from the sample irradiator toward the sample holder, a focus adjuster installed on a path of a broadband light reflected from the beam splitter, the focus adjuster configured to adjust an optical path length of a passing light, and a reference mirror configured to reflect a light passing through the focus adjuster.

The focus adjuster may include a plurality of optical path adjustment windows configured to respectively provide different optical path lengths, and
a driver configured to move one optical path adjustment window of the plurality of optical path adjustment windows to be selectively positioned on a path of the broadband light.

The photon measurement unit may include a second wavelength separation element configured to transmit a light corresponding to one harmonic generation of a second harmonic generation (SHG) and a third harmonic generation (THG) among components of a light emitted by irradiating the sample with a laser pulse, and to reflect a light corresponding to a remaining harmonic generation, a first photon measurer configured to measure a harmonic generation transmitting the second wavelength separation element, and a second photon measurer configured to measure a harmonic generation reflected from the second wavelength separation element.

A broadband light irradiated from the sample irradiator may transmit a first wavelength separation element to be irradiated onto a sample holder, and between the first wavelength separation element and the sample holder, the broadband light and the laser pulse may be irradiated onto the sample while forming a common path.

The optical coherence microscope module and the nonlinear microscope module may be disposed at positions opposite to each other with respect to the sample holder, and a broadband light source irradiated from the sample irradiator may be vertically irradiated onto one surface of the sample holder, and a laser pulse reflected from the first wavelength separation element may be vertically irradiated onto the other surface of the sample holder.

According to another aspect, there is provided a method for controlling a dual mode microscope system, the method for controlling a dual mode microscope system provided with a sample holder for supporting a sample, a nonlinear microscope module for acquiring a nonlinear image of a sample supported on the sample holder, and an optical coherence microscope module for acquiring an optical coherence tomographic image of a sample supported on the sample holder, including a light source driving operation of heating a specific portion of the sample using a laser pulse irradiated from a light source of the nonlinear microscope module, and an optical axis alignment operation of aligning, based on a relative position of the specific portion sensed from an optical coherence tomographic image acquired from the optical coherence microscope module, axes of lights generated from respective light sources of the optical coherence microscope module and the nonlinear microscope module, and irradiated onto the sample to be positioned on a straight line.

The light source driving operation may include an operation of locally changing an optical coherence tomographic image of the sample using a photothermal effect by irradiating a laser having a periodic pulse form onto the sample through the light source of the nonlinear microscope module.

The optical axis alignment operation may include a specific portion sensing operation of calculating position coordinates of the specific portion in the optical coherence tomographic image acquired through the optical coherence microscope module, a relative position sensing operation of calculating a relative position between central coordinates of the optical coherence tomographic image and the position coordinates of the specific portion, and an optical axis adjustment operation of aligning an optical axis of one module of the nonlinear microscope module and the optical coherence microscope module based on the relative position.

The method for controlling a dual mode microscope system according to another aspect may further include a focus adjustment operation of adjusting a focus of an optical coherence tomographic image by selectively positioning one of a plurality of optical path adjustment windows respectively providing different optical path lengths on a path of a light irradiated from a light source of the optical coherence microscope module toward a reference mirror.

### EFFECTS

According to a dual mode microscope system according to an example embodiment, an optical coherence tomographic image and a nonlinear image may be simultaneously observed with respect to one sample.

According to the dual mode microscope system according to an example embodiment, it is possible to sense a photothermal effect generated by irradiating a laser pulse emitted toward a sample from a light source of a nonlinear microscope module on an optical coherence tomographic image of the sample acquired from an optical coherence microscope module. Thus, optical axes of the optical coherence microscope module and the nonlinear microscope module may be aligned.

### BRIEF DESCRIPTION OF DRAWINGS

FIG. 1 is a diagram illustrating an optical configuration of a dual mode microscope system according to an example embodiment.
FIG. 2 is a diagram illustrating an optical configuration of a dual mode microscope system according to an example embodiment.
FIG. 3 is a diagram illustrating an optical configuration of an optical coherence microscope module according to an example embodiment.
FIG. 4 is a flowchart illustrating a method for controlling a dual mode microscope system according to an example embodiment.
FIG. 5 is a flowchart illustrating an optical axis alignment operation according to an example embodiment.
FIG. 6 is an image of a corn grain.
FIG. 7 is an optical coherence tomographic image of a corn grain photographed through an optical coherence microscope module according to an example embodiment.
FIG. 8 is a cross-sectional image of a corn grain photographed through an optical coherence microscope module according to an example embodiment.
FIG. 9 is a second harmonic generation (SHG) image of the area A of FIG. 8 photographed through a nonlinear microscope module according to an example embodiment.
FIG. 10 is a third harmonic generation (THG) image of the area A of FIG.8 photographed through a nonlinear microscope module according to an example embodiment.
FIG. 11 is an image of a clover leaf.
FIG. 12 is an optical coherence tomographic image of a clover leaf photographed through an optical coherence microscope module according to an example embodiment.
FIG. 13 is a cross-sectional image of a clover leaf photographed through an optical coherence microscope module according to an example embodiment.
FIG. 14 is an SHG image of the area A of FIG. 13 photographed through a nonlinear microscope module according to an example embodiment.
FIG. 15 is a THG image of the area A of FIG. 13 photographed through a nonlinear microscope module according to an example embodiment.
FIG. 16 is a diagram illustrating a synchronization process between an optical coherence microscope module and a nonlinear microscope module according to an example embodiment.
FIG. 17 illustrates an optical coherence tomographic image of a sample photographed through an optical coherence microscope module according to an example embodiment.
FIG. 18 illustrates an optical coherence tomographic image acquired by photographing a photothermal effect generated in a portion of a sample irradiated with a laser pulse.
FIG. 19 illustrates an SHG image and a THG image of a sample photographed through a nonlinear microscope module.

### BEST MODE FOR CARRYING OUT THE INVENTION

Hereinafter, example embodiments will be described in detail with reference to the illustrative drawings. Regarding reference numerals assigned to components in each drawing, it should be noted that the same components will be designated by the same reference numerals, wherever possible, even though they are illustrated in different drawings. Also, in the description of the example embodiments, detailed description of well-known related configurations or functions will be omitted when it is deemed that such description interferes with the understanding of the example embodiments.

In addition, terms such as first, second, A, B, (a), (b), and the like may be used herein to describe components of the example embodiments. These terms are only used to distinguish one component from another component, and essential, order, or sequence of corresponding components are not limited by these terms. It will be understood that when one component is referred to as being "connected to", "coupled to", or "linked to" another component, one component may be "connected to", "coupled to", or "linked to" another component via a further component although one component may be directly connected to or directly linked to another component.

A component included in any one example embodiment and another component including a function in common with that of the component will be described using the same designation in other example embodiments. Unless otherwise indicated, a description of one example embodiment may be applied to other example embodiments, and a detailed description will be omitted in an overlapping range.

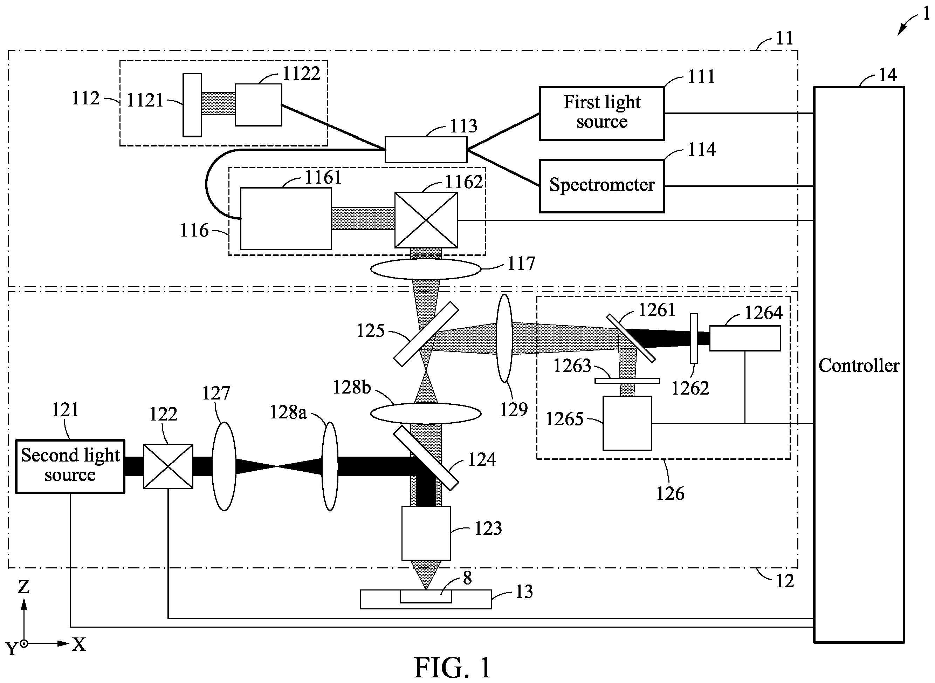

FIG. 1 is a diagram illustrating an optical configuration of a dual mode microscope system according to an example embodiment.

Referring to FIG. 1, a dual mode microscope system 1 according to an example embodiment may be a system in which an optical coherence microscope module 11 for observing an optical coherence tomographic image of one sample 8 through an optical coherence tomography (OCT), and at the same time, a nonlinear microscope module 12 for acquiring a three-dimensional structure image of the sample 8 are complexly integrated. The dual mode microscope system 1 may include a sample holder 13, an optical coherence microscope module 11, a nonlinear microscope module 12, and a controller 14.

The sample holder 13 may support the sample 8 to be measured through the optical coherence microscope module 11 and the nonlinear microscope module 12. For example, the sample holder 13 may move along a plane perpendicular to an irradiation direction of a light. For example, the sample 8 may be a biological sample formed of a biological material.

The optical coherence microscope module 11 may observe an optical coherence tomographic image of the sample 8 through the OCT. The optical coherence microscope module 11 may include a first light source 111, an optical coupler 113, a reference unit 112, a sample irradiator 116, a scan lens 117, and a spectrometer 114.

The first light source 111 may emit a broadband light. For example, the first light source 111 may emit a broadband light including a wavelength having less than a first setting wavelength to be described below, and having a second setting wavelength or more. For example, the broadband light generated from the first light source 111 may be transferred through an optical fiber cable between the optical coupler 113, the reference unit 112, the sample irradiator 116, and the spectrometer 114.

The optical coupler 113 may be installed between the first light source 111, the reference unit 112, the sample irradiator 116, and the spectrometer 114 to form a moving path of the broadband light. For example, the broadband light formed from the first light source 111 may be transferred toward the reference unit 112 and the sample irradiator 116 while passing through the optical coupler 113, and may pass through the sample irradiator 116 to be irradiated onto the sample 8, and then the reflected broadband light may be transferred to the spectrometer 114 while passing through the optical coupler 113 again. In the same manner, the broadband light reflected from the reference unit 112 may be transferred to the spectrometer 114 while passing through the optical coupler 113 again.

The reference unit 112 may form a reference light that is reflected without being irradiated onto the sample so as to form the optical coherence tomographic image of the sample 8. The reference unit 112 may include a reference mirror 1121 and a first collimator 1122.

The reference mirror 1121 may reflect the broadband light transferred to the reference unit 112 in a reverse direction.

The first collimator 1122 may convert the broadband light transferred to the reference unit 112 into a parallel ray to irradiate toward the reference mirror 1121.

For example, the reference unit 112 may further include a dispersion element such as a diffraction grating that separates the broadband light by wavelengths.

The sample irradiator 116 may split the broadband light transferred from the first light source 111, and may irradiate the split light toward the sample holder 13 that supports the sample 8. The sample irradiator 116 may transfer the broadband light irradiated onto and reflected from the sample 8 in a reverse direction. The sample irradiator 116 may include a second collimator 1161 and a first beam scanner 1162.

The second collimator 1161 may convert the broadband light transferred from the first light source 111 into a parallel ray to irradiate toward the first beam scanner 1162.

The first beam scanner 1162 may irradiate the broadband light toward the sample 8. For example, the first beam scanner 1162 may vertically irradiate the broadband light onto an upper side of the sample holder 13 on which the sample 8 is disposed. The first beam scanner 1162 may adjust a position of an optical axis of the broadband light irradiated onto the sample 8. For example, the first beam scanner 1162 may displace, based on a plane formed by an upper surface of the sample holder 13, the optical axis along two axial directions perpendicular to each other in the plane. For example, the first beam scanner 1162 may adjust an angle at which the broadband light is irradiated onto the sample 8.

For example, the sample irradiator 116 may further include a dispersion element such as a diffraction grating that separates the broadband light by wavelengths.

A first scan lens 117 may be installed on a path of the broadband light irradiated from the sample irradiator 116 toward the sample 8 to focus the broadband light irradiated toward the sample 8.

The spectrometer 114 may measure a broadband light that is formed by mutual coherence between the broadband light irradiated onto and reflected from the sample 8 through the sample irradiator 116 and the broadband light reflected from the reference unit 112 to form a spectrum image divided by wavelengths.

The nonlinear microscope module 12 may nonlinearly excite a plurality of photons (hereinafter, "multi photons") by irradiating a laser pulse onto the sample 8, and may measure an excitation light generated through a multiphoton excitation phenomenon to observe a nonlinear image of the sample 8. The nonlinear microscope module 12 may include a second light source 121, a second beam scanner 122, a first wavelength separation element 124, an objective lens 123, a second wavelength separation element 125, a photon measurement unit 126, and a plurality of lenses.

The second light source 121 may form a laser pulse for irradiating the sample 8. For example, as the second light source 121, a femtosecond pulse laser having peak power may be used. For example, the second light source 121 may form a laser pulse having a wavelength of 1560 nm.

The second beam scanner 122 may irradiate the laser pulse generated from the second light source 121 toward the first wavelength separation element 124.

For example, the second beam scanner 122 may irradiate the laser pulse toward the first wavelength separation element 124 disposed on the optical axis of the broadband light irradiated from the sample irradiator 116 toward the sample 8, and a direction in which the laser pulse is irradiated toward the first wavelength separation element 124 may be formed perpendicular to an irradiation direction of the broadband light irradiated toward the sample 8.

For example, the second beam scanner 122 may adjust a position of an optical axis of the laser pulse irradiated onto the first wavelength separation element 124. For example, the second beam scanner 122 may displace the optical axis of the laser pulse. For example, the second beam scanner 122 may irradiate the laser pulse in a direction perpendicular to the optical axis of the broadband light, and may displace the optical axis of the laser pulse along two vertical axial directions of a plane perpendicular to the irradiation direction. For example, the second beam scanner 122 may adjust an irradiation angle of the laser pulse.

The first wavelength separation element 124 may be a dichroic mirror that is installed on the optical axis of the broadband light irradiated from the sample irradiator 116 toward the sample 8 to be capable of reflecting a component of a light having the first setting wavelength or more, and transmitting a component of a light having less than the first setting wavelength. For example, the first setting wavelength may be 1400 nm.

For example, the first wavelength separation element 124 may be disposed on a path of the broadband light irradiated toward the sample 8 in a state of being inclined at an angle of 45° to the irradiation direction of the broadband light. Accordingly, at least a part of the laser pulse emitted from the second light source 121 may be reflected toward the sample holder 13, and at least a part of the reflected light after being irradiated onto the sample may be transmitted.

According to the above structure, between the first wavelength separation element 124 and the sample holder 13, the optical axes on which the broadband light and the laser pulse are irradiated onto the sample 8 may be parallel, or may form a common path.

An objective lens 123 may be installed on paths of the broadband light and the laser pulse irradiated toward the sample holder 13 to condense the broadband light and the laser pulse onto the sample 8.

When the laser pulse focused through the objective lens 123 is irradiated onto the sample 8, the excitation light formed by the multiphoton excitation phenomenon in which a plurality of photons of the sample 8 are nonlinearly excited may be emitted in a direction opposite to the irradiation direction.

The second wavelength separation element 125 may be a dichroic mirror that is installed in a path of a broadband light transferred between the sample irradiator 116 and the first wavelength separation element 124 to be capable of transmitting a component of a light having the second setting wavelength or more, and reflecting a component of a light having less than the second setting wavelength. For example, the second setting wavelength may be 1000 nm.

For example, the second wavelength separation element 125 may be disposed on the path of the broadband light irradiated toward the sample 8 in a state of being inclined at an angle of 45° to the irradiation direction of the broadband light. Accordingly, at least a part of the laser pulse reflected after being irradiated onto the sample 8 may be reflected toward the photon measurement unit 126, and the broadband light irradiated from the sample irradiator 116 may be transmitted toward the sample holder 13.

The photon measurement unit 126 may measure an excitation light generated by irradiating the sample 8 of the sample holder 13. The photon measurement unit 126 may include a third wavelength separation element 1261, a first filter 1262, a first photon measurer 1264, a second filter 1263, and a second photon measurer 1265.

The third wavelength separation element 1261 may be a dichroic mirror that is installed in a path through which the excitation light is reflected from the second wavelength separation element 125 and travels to be capable of reflecting or transmitting a component of a light having a third setting wavelength or more, and reflecting or transmitting a component of a light having less than the third setting wavelength.

For example, the third wavelength separation element 1261 may transmit a light corresponding to one harmonic generation of a second harmonic generation (SHG) and a third harmonic generation (THG) among components of a light, and may reflect a light corresponding to a remaining harmonic generation.

For example, a component of a light corresponding to the SHG among components of the excitation light may transmit the third wavelength separation element 1261 to be irradiated onto the first photon measurer 1264, and the component of the light corresponding to the SHG among the components of the excitation light may be reflected by the third wavelength separation element 1261 to be irradiated onto the second photon measurer 1265.

The first filter 1262 may be installed in front of the first photon measurer 1264 to select and transmit the excitation light incident on the first photon measurer 1264 according to a wavelength.

The first photon measurer 1264 may be a photo multiplier tube (PMT) that measures photon energy of the incident excitation light and converts it into an electric signal.

The second filter 1263 may be installed in front of the second photon measurer 1265 to select and transmit the excitation light incident on the second photon measurer 1265 according to a wavelength.

The second photon measurer 1265 may be the PMT that measures photon energy of the incident excitation light and converts it into an electric signal.

For example, when the SHG is incident on the first photon measurer 1264 and the THG is incident on the second photon measurer 1265, each of the photon measurer 1234 and 1265 may separate and measure an excitation light that emits harmonic generations having different wavelength bands for different cell materials through a signal measured according to its wavelength.

A plurality of lenses may be installed on a path of the broadband light source, the laser pulse, or the excitation light to extend an image of each light or change a luminous flux of each light.

For example, the plurality of lenses may include a second scan lens 12 that is installed on a path of the laser pulse irradiated from the second beam scanner 122 to focus a light, a first tube lens 128a that is installed on a rear path of the second scan lens 127 to convert the luminous flux back to be parallel, a second tube lens 128b that is installed between the second wavelength separation element 125 and the first wavelength separation element 124 to convert a luminous flux of the focused broadband light to be parallel, and a condensing lens 129 that is installed on a path of the excitation light reflected from the second wavelength separation element 125 and irradiated toward the photon measurement unit 126 to focus a luminous flux of the excitation light.

The controller 14 may form an optical coherence tomographic image of the sample 8 through the spectrum image measured by the spectrometer 114, and may measure the photon energy of the excitation light measured by the photon measurement unit 126 to acquire the nonlinear image of the sample 8.

For example, the controller 14 may output the optical coherence tomographic image and the nonlinear image of the sample 8 acquired through respective microscope modules 11 and 12 through an additional display.

For example, the controller 14 may control the first beam scanner 1162 or the second beam scanner 122, thereby adjusting a position of an irradiation point or a position of the optical axis of the broadband light or the laser pulse irradiated onto the sample 8.

The controller 14 may sense a portion of the optical coherence tomographic image of the sample 8 that is locally refracted in a process of heating the sample 8 through the laser pulse emitted from the second light source 121 to sense a relative position of the optical axis of each of the broadband light and the laser pulse irradiated toward the sample 8.

For example, when the laser pulse is irradiated onto the sample 8, a portion of the sample 8 irradiated with the laser pulse may be heated due to a photothermal effect. Thus, when the optical coherence tomographic image of the sample 8 acquired through the optical coherence microscope module 11 is observed, a specific portion of the sample 8 that is locally refracted may be sensed. Accordingly, it may be confirmed that the specific portion refracted on the optical coherence tomographic image is a field-of-view area of the nonlinear microscope module 12.

For example, the controller 14 may sense a relative position between central coordinates of the optical coherence tomographic image of the sample 8 and coordinates of a specific portion where the optical coherence tomographic image is locally refracted. Accordingly, the controller 14 may align the optical axis of the broadband light and the optical axis of the laser pulse irradiated toward the sample 8 so as to be formed on a straight line by driving one scanner of the first beam scanner 1162 and the second beam scanner 122 based on the measured relative position. Through such a process, it is possible to quickly identify a portion of the entire sample 8 where the field-of-view area of the nonlinear microscope module 12 capable of observing a very narrow area with high resolution is positioned, thereby improving user convenience.

For example, after the optical axes of the broadband light and the laser pulse are aligned with each other, the controller 14 may move the sample holder 13 in a direction parallel to an irradiation direction of a light, thereby simultaneously moving field-of-view areas of the optical coherence tomographic image and the nonlinear image.

According to the dual microscope system 1 according to an example embodiment, it is possible to simultaneously observe the optical coherence tomographic image and the nonlinear image of the sample 8 by sharing one objective lens 123, and it is possible to easily match reference points of the field-of-view areas of the optical coherence tomographic image and the nonlinear image.

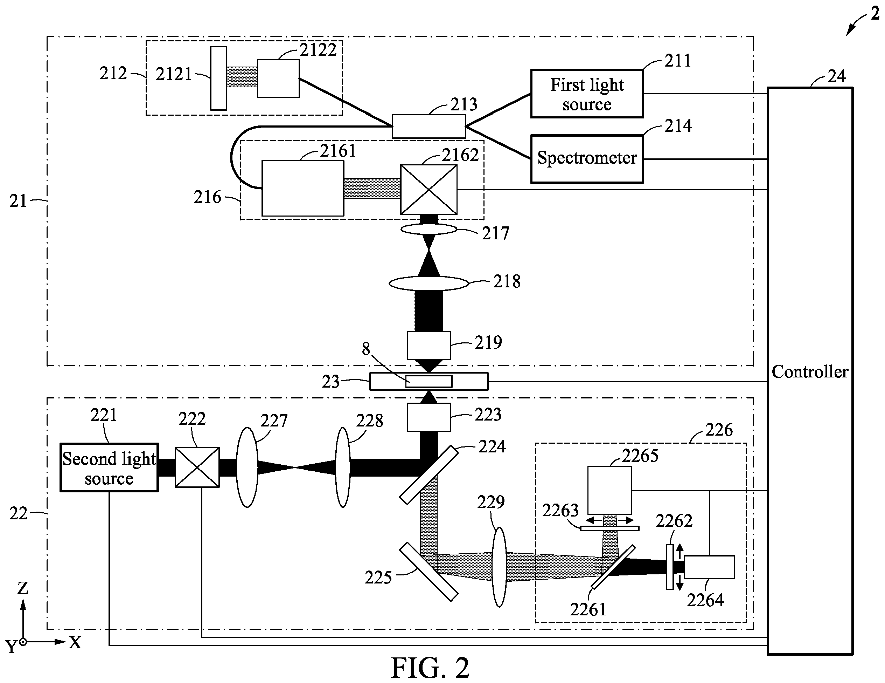

FIG. 2 is a diagram illustrating an optical configuration of a dual mode microscope system according to an example embodiment.

FIG. 2 illustrates a dual microscope system 2 having a configuration according to an example embodiment different from that of the dual microscope system 1 illustrated in FIG. 1. The dual microscope system 2 according to an example embodiment may observe an optical coherence tomographic image and a nonlinear image of one sample 8 since lights emitted from light sources of an optical coherence microscope module 21 and a nonlinear microscope module 22 are irradiated onto both surfaces of the sample holder 23, respectively. The dual microscope system 2 may include a sample holder 23, an optical coherence microscope module 21, a nonlinear microscope module 22, and a controller 24.

The sample holder 23 may be installed between the optical coherence microscope module 21 and the nonlinear microscope module 22. A light emitted from the optical coherence microscope module 21 may be vertically irradiated onto one surface of the sample holder 23, and a light emitted from the nonlinear microscope module 22 may be vertically irradiated onto the other surface of the sample holder 23.

For example, the sample holder 23 may be movable toward three axes between the optical coherence microscope module 21 and the nonlinear microscope module 22. According to such a structure, when it is desired to observe another area of the sample 8 while simultaneously observing the optical coherence tomographic image and the nonlinear image of the sample 8, the sample holder 23 may be moved in a desired direction without a need to simultaneously adjust the optical axis of the broadband light and the optical axis of the laser pulse, thereby simultaneously adjusting the field-of-view areas of the optical coherence tomographic image and the nonlinear image in a simple manner.

The optical coherence microscope module 21 may include a first light source 211 that emits a broadband light, an optical coupler 213, a reference unit 212 provided with a reference mirror 2121 and a first collimator 2122, a sample irradiator 216 provided with a second collimator 2161 and a first beam scanner 2162, a spectrometer 214, a first scan lens 217, a first tube lens 218, and a first objective lens 219.

The first beam scanner 2162 may irradiate the transferred broadband light toward the one surface of the sample holder 23. For example, the first beam scanner 2162 may allow the broadband light to be vertically incident on the sample holder 23.

The first scan lens 217 may be installed on a path of the broadband light irradiated from the sample irradiator 216 toward the one surface of the sample holder 23 to focus a luminous flux of the broadband light.

The first tube lens 218 may convert the luminous flux of the broadband light that is condensed while passing through the first scan lens 217 back to be parallel, and may irradiate toward the first objective lens 219.

The first objective lens 219 may be installed on a path of the broadband light irradiated toward the one surface of the sample holder 23 to condense the broadband light toward one surface of the sample 8.

The nonlinear microscope module 22 may include a second light source 221 that emits a laser pulse, a second beam scanner 222, a first wavelength separation element 224, a second objective lens 223, a second wavelength separation element 225, a photon measurement unit 226, and a plurality of lenses.

The second beam scanner 222 may irradiate a laser pulse generated from the second light source 221 toward the first wavelength separation element 224. For example, the second beam scanner 222 may irradiate the laser pulse in a direction parallel to the sample holder 23.

The first wavelength separation element 224 may reflect a component of a light having a first setting wavelength or more, and may transmit a component of a light having less than the first setting wavelength. For example, the first wavelength separation element 224 may reflect a part of the laser pulse transferred from the second beam scanner 222 so as to be irradiated onto the other surface of the sample holder 23, and may transmit a part of a light irradiated onto and reflected from the sample 8.

For example, the first wavelength separation element 224 may be disposed to form an angle of 45° with an irradiation direction of the laser pulse irradiated from the second beam scanner 222. According to the above structure, the broadband light and the laser pulse respectively irradiated onto the one surface and the other surface of the sample holder 23 may be parallel to each other, and at the same time may be vertically irradiated onto the both surfaces of the sample holder 23.

The second objective lens 223 may be installed on a path of the laser pulse irradiated toward the other surface of the sample holder 23 to condense the laser pulse toward the other surface of the sample 8.

The second wavelength separation element 225 may reflect a part of an excitation light formed from the sample 8 toward the photon measurement unit 226. For example, the second wavelength separation element 225 may be installed on a path through which an excitation light generated by irradiating the sample 8 with the laser pulse transmits the first wavelength separation element 224 and travels to transmit a component of a light having a second setting wavelength or more, and reflect a component of a light having less than the second setting wavelength.

The photon measurement unit 226 may measure an excitation light generated by irradiating the sample holder 23. For example, the photon measurement unit 226 may include a third wavelength separation element 2261, a first filter 2262, a first photon measurer 2264, a second filter 2263, and a second photon measurer 2265.

A plurality of lenses may be installed on a path of the laser pulse or the excitation light to extend an image of each light or change a luminous flux of each light.

For example, the plurality of lenses may include a second scan lens 227 that is installed on a path of the laser pulse irradiated from the second beam scanner 222 to focus a light, a second tube lens 228 that is installed on a rear path of the second scan lens 227 to convert the luminous flux back to be parallel, and a condensing lens 229 that is installed on a path of the excitation light reflected from the second wavelength separation element 225 and irradiated toward the photon measurement unit 226 to focus a luminous flux of the excitation light.

The controller 24 may sense the photothermal effect observed on the optical coherence tomographic image, thereby easily identifying a relative position of the optical axis of each of the broadband light and the laser pulse irradiated onto the sample 8.

For example, the controller 24 may control at least one scanner of the first beam scanner 2162 and the second beam scanner, thereby aligning the optical axes of the broadband light and the laser pulse irradiated onto the sample 8.

As another example, as the optical coherence microscope module 21 and the nonlinear microscope module 22 are installed at positions opposite to each other with respect to the sample holder 23, at least one module of the respective modules 21 and 22 may be displaced, thereby aligning the optical axes of the broadband light and the laser pulse.

For example, after the optical axes of the broadband light and the laser pulse are aligned with each other, the controller 24 may move the sample holder 23 in a direction parallel to an irradiation direction of a light, thereby simultaneously moving the field-of-view areas of the optical coherence tomographic image and the nonlinear image.

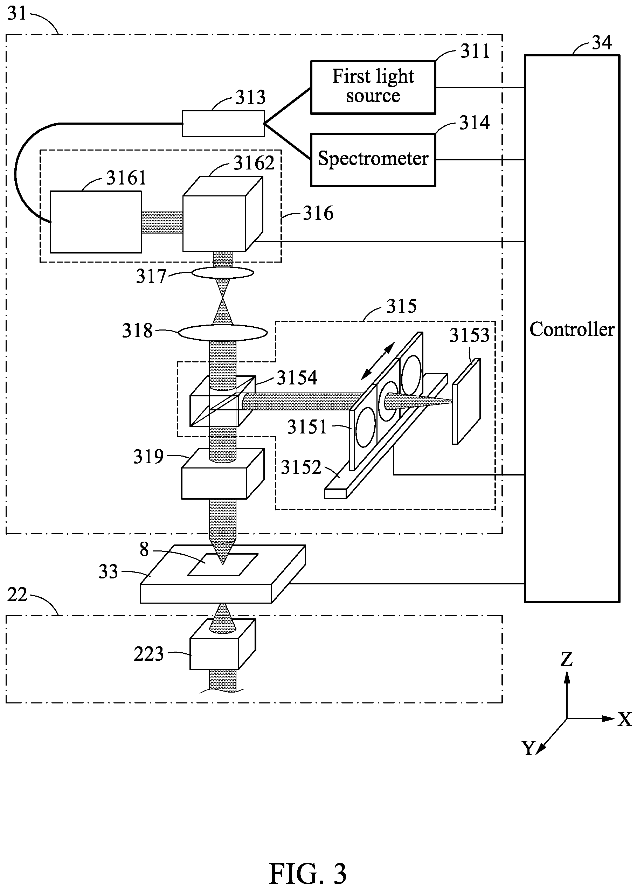

FIG. 3 is a diagram illustrating an optical configuration of an optical coherence microscope module according to an example embodiment.

FIG. 3 illustrates a dual mode microscope system 3 having a configuration of an optical coherence microscope module 31 different from those of the dual mode microscope systems 1 and 2 illustrated in FIGS. 1 and 2. It may be understood that the dual mode microscope system 3 according to an example embodiment has a configuration of a reference unit 315 different from that of the dual mode microscope system 2 illustrated in FIG. 2.

The reference unit 315 of the optical coherence microscope module 31 according to an example embodiment may include a beam splitter 3154 that reflects at least a part of a broadband light irradiated from a sample irradiator 316 toward a sample holder 33, focus adjusters 3151 and 3152 that are installed on a path of the broadband light reflected from the beam splitter 3154 to adjust an optical path length of a passing light, and a reference mirror 3153 that reflects a light passing through the focus adjusters 3151 and 3152.

For example, the focus adjusters 3151 and 3152 may include a plurality of optical path adjustment windows 3151 respectively providing different optical path lengths, and a driver 3152 that moves one optical path adjustment window 3151 of the plurality of optical path adjustment windows 3151 to be selectively positioned on a path of the broadband light. Here, the plurality of optical path adjustment windows 3151 may have different thicknesses and/or materials.

For example, the plurality of optical path adjustment windows 3151 may be aligned on the driver 3152 in a state of being spaced apart from each other in parallel, and the driver 3152 may slide the plurality of optical path adjustment windows 3151 along one direction, thereby positioning a desired optical path adjustment window 3151 on the path of the broadband light.

As another example, the plurality of optical path adjustment windows 3151 may have a flip mount structure of being radially disposed spaced apart on a circular plate. In this case, the driver 3152 may position the desired optical path adjustment window 3151 on the path of the broadband light by rotating the circular plate.

According to the above structure, when an optical coherence tomographic image of the biological sample 8 is observed through the optical coherence microscope module 21, in order to solve a problem of failing to properly observing the optical coherence tomographic image due to a change in a thickness of the biological sample 8 or an influence of water contained therein, a traveling distance of a light may be adjusted by replacing the plurality of optical path adjustment windows 3151 provided on the reference unit 315, thereby selecting an optical path adjustment window 3151 where the optical coherence tomographic image is best observed.

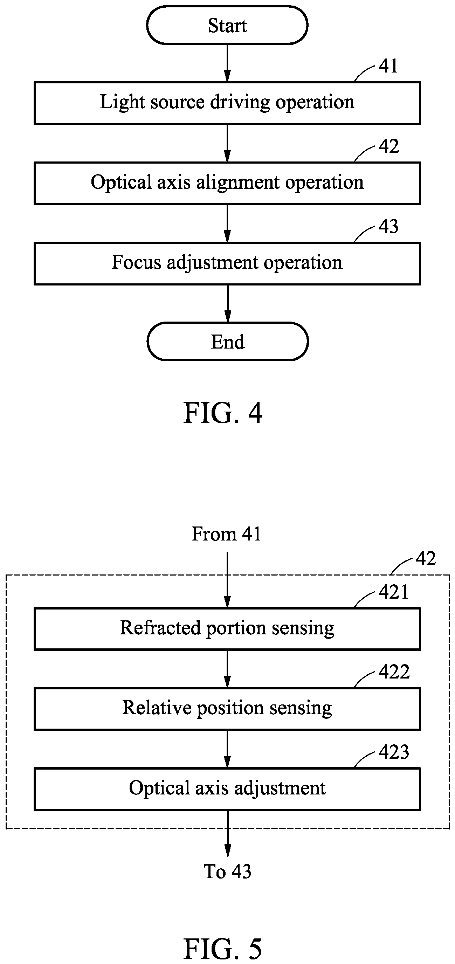

FIG. 4 is a flowchart illustrating a method for controlling a dual mode microscope system according to an example embodiment, and FIG. 5 is a flowchart illustrating an optical axis alignment operation according to an example embodiment.

A method for controlling a dual mode microscope system including the dual mode microscope systems 1, 2, and 3 illustrated in FIGS. 1 to 3 will be described with reference to FIGS. 4 and 5.

For convenience of description, it should be noted that the method for controlling a dual mode microscope system will be described with reference to the dual mode microscope system 3 according to an example embodiment illustrated in FIG. 3, however, the method for controlling a dual mode microscope system to be described below is not limited to the dual mode microscope system 3 of FIG. 3, but may be applied in common to all of the dual mode microscope systems 1 and 2 according to other example embodiments or a dual mode microscope system achieved through a combination thereof.

The method for controlling a dual mode microscope system according to an example embodiment may include a light source driving operation 41, an optical axis alignment operation 42, and a focus adjustment operation 43.

The light source driving operation 41 may be an operation of heating a specific portion of the sample 8 using a laser pulse irradiated from a light source of the nonlinear microscope module 22.

For example, the light source driving operation 41 may include an operation of locally changing an optical coherence tomographic image of the sample 8 using a photothermal effect by irradiating a laser pulse having a periodic pulse form onto the sample 8 through the second light source 221 of the nonlinear microscope module.

The optical axis alignment operation 42 may be an operation of adjusting, based on a relative position of a specific portion sensed from the optical coherence tomographic image formed from the optical coherence microscope module 31, optical axes irradiated onto the sample 8 from respective light sources 311 and 221 of the optical coherence microscope module 31 and the nonlinear microscope module 22.

For example, the optical axis alignment operation 42 may include a refracted portion sensing operation 421 of calculating position coordinates of a specific portion that is locally refracted by the photothermal effect in the optical coherence tomographic image acquired through the optical coherence microscope module 31, a relative position sensing operation 422 of calculating, by a controller 34, a relative position between central coordinates of the optical coherence tomographic image and the position coordinates of the specific portion, and an optical axis adjustment operation 423 of aligning, by the controller 34, the optical axis of one module of the nonlinear microscope module 22 and the optical coherence microscope module 31 based on the calculated relative position.

For example, the optical axis adjustment operation 423 may include an operation of controlling, by the controller 34, at least one beam scanner of the first beam scanner 3162 and the second beam scanner 222, to align the optical axes of the broadband light and the laser pulse irradiated onto the sample 8.

The focus adjustment operation 43 may include the focus adjustment operation 43 of selectively positioning, by the controller 34, one of the plurality of optical path adjustment windows 3151 respectively providing different optical path lengths on a path of a light irradiated from a light source of the optical coherence microscope module 31 toward a reference mirror 312 to adjust a focus of the optical coherence tomographic image.

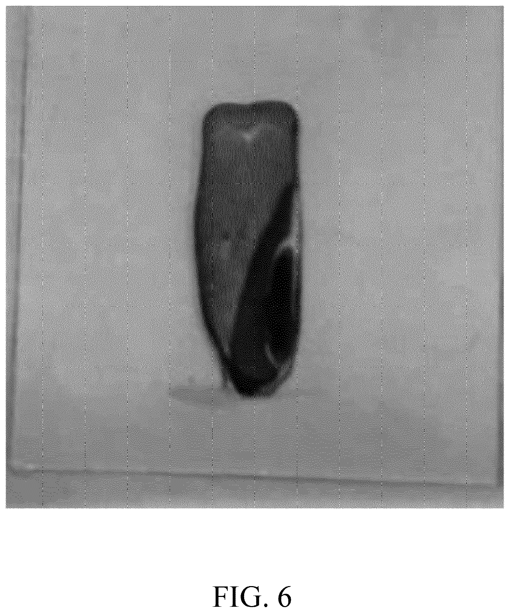

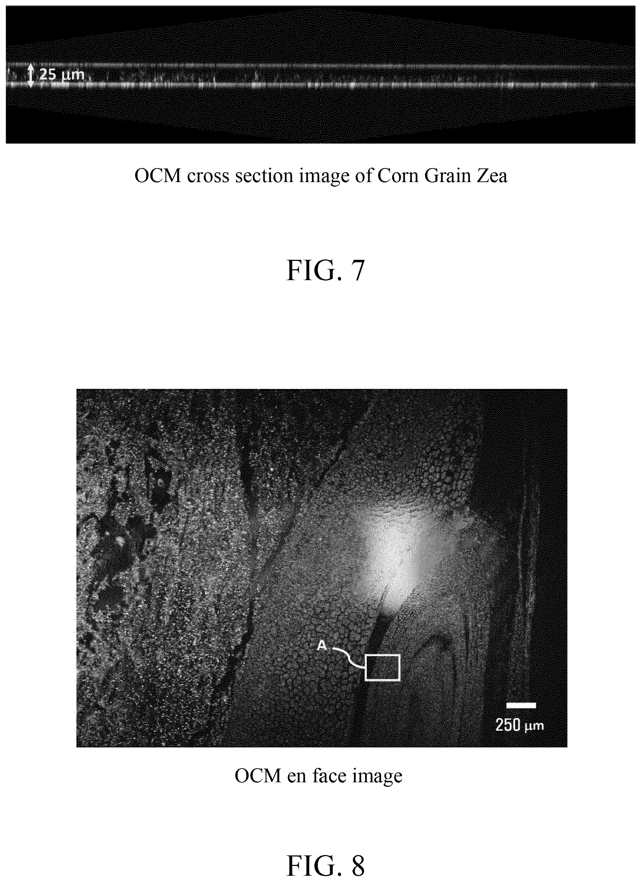

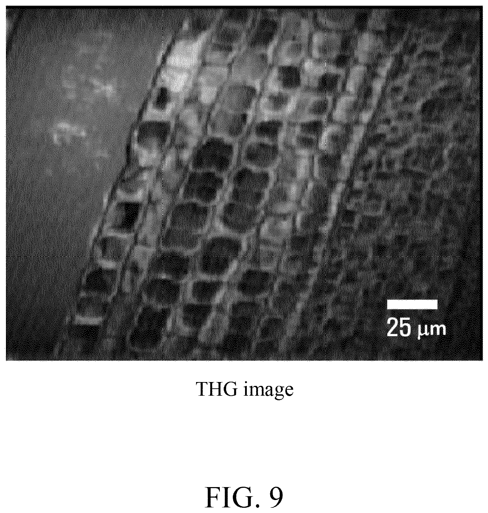

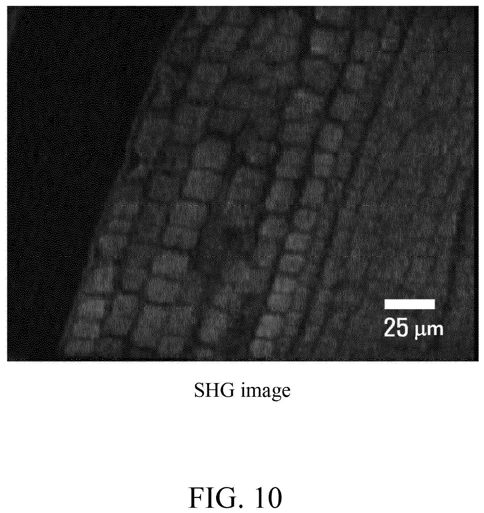

FIG. 6 is an image of a corn grain, FIG. 7 is an optical coherence tomographic image of a corn grain photographed through an optical coherence microscope module according to an example embodiment, FIG. 8 is a cross-sectional image of a corn grain photographed through an optical coherence microscope module according to an example embodiment, FIG. 9 is an SHG image of the area A of FIG. 8 photographed through a nonlinear microscope module according to an example embodiment, and FIG. 10 is a THG image of the area A of FIG.8 photographed through a nonlinear microscope module according to an example embodiment.

Referring to FIGS. 6 to 10, an image acquired by simultaneously photographing an optical coherence tomographic image and a nonlinear image of a corn grain (ZEA MAYS) through the dual mode microscope system according to an example embodiment may be confirmed.

First, as illustrated in FIGS. 7 and 8, the optical coherence tomographic image and the cross-sectional image of the corn grain may be acquired through the optical coherence microscope module according to an example embodiment.

Thereafter, it may be confirmed that an image photographed using an SHG of a laser pulse and an image photographed using a THG of the laser pulse respectively appear as the images illustrated in FIGS. 9 and 10 after an optical axis of the nonlinear microscope module according to an example embodiment is aligned to the area A so as to photograph a high-resolution cross-sectional image of the area A of FIG. 8.

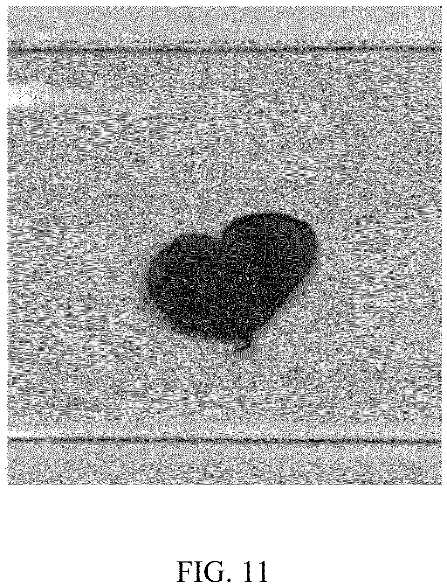

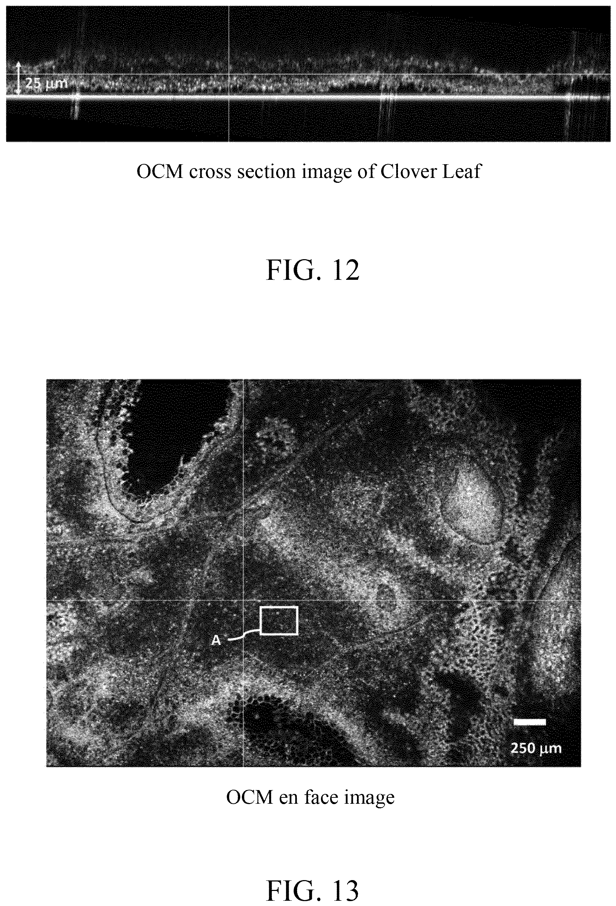

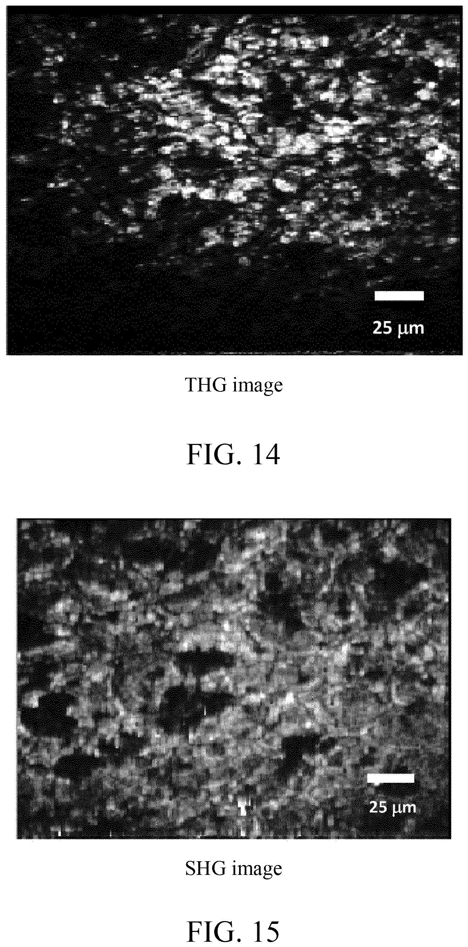

FIG. 11 is an image of a clover leaf, FIG. 12 is an optical coherence tomographic image of a clover leaf photographed through an optical coherence microscope module according to an example embodiment, FIG. 13 is an image of a clover leaf photographed through an optical coherence microscope module according to an example embodiment, FIG. 14 is a SHG image of the area A of FIG. 13 photographed through a nonlinear microscope module according to an example embodiment, and FIG. 15 is a THG image of the area A of FIG. 13 photographed through a nonlinear microscope module according to an example embodiment.

Referring to FIGS. 11 to 15, an image acquired by simultaneously photographing an optical coherence tomographic image and a nonlinear image of a clover leaf through the dual mode microscope system according to an example embodiment may be confirmed.

First, as illustrated in FIGS. 12 and 13, the optical coherence tomographic image and a cross-sectional image of the clover leaf may be acquired through the optical coherence microscope module according to an example embodiment.

Thereafter, it may be confirmed that an image photographed using an SHG of a laser pulse and an image photographed using a THG of the laser pulse respectively appear as the images illustrated in FIGS. 14 and 15 after an optical axis of the nonlinear microscope module according to an example embodiment is aligned to the area A so as to photograph a high-resolution cross-sectional image of the area A of FIG. 13.

Referring to FIGS. 6 to 15, it may be possible to simultaneously photograph an optical coherence tomographic image and a nonlinear image with respect to one sample through the dual mode microscope system according to an example embodiment, and it may be possible to acquire a high-resolution cross-sectional image of an area desired by a user by aligning a mutual optical axis between the optical coherence microscope module and the nonlinear microscope module.

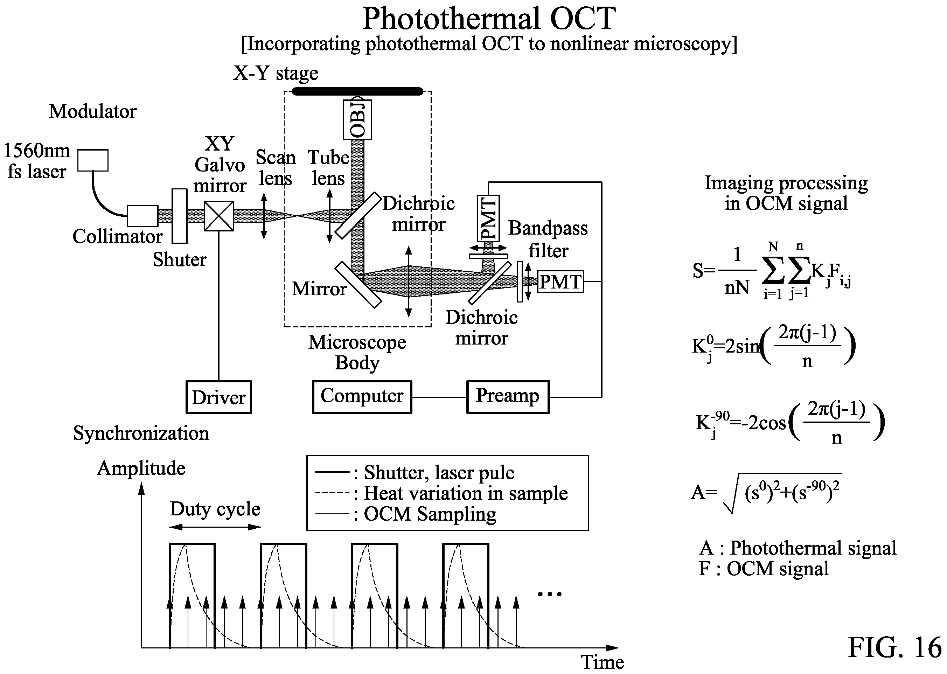

FIG. 16 is a diagram illustrating a synchronization process between an optical coherence microscope module and a nonlinear microscope module according to an example embodiment.

Referring to FIG. 16, the synchronization process between the optical coherence microscope module and the nonlinear microscope module according to an example embodiment may be confirmed.

For example, in order to observe a photothermal effect generated in a sample by a laser pulse irradiated from the nonlinear microscope module on an optical coherence tomographic image, an imaging sampling signal of the optical coherence microscope module and a laser pulse signal emitted from a light source of the nonlinear microscope module may be synchronized.

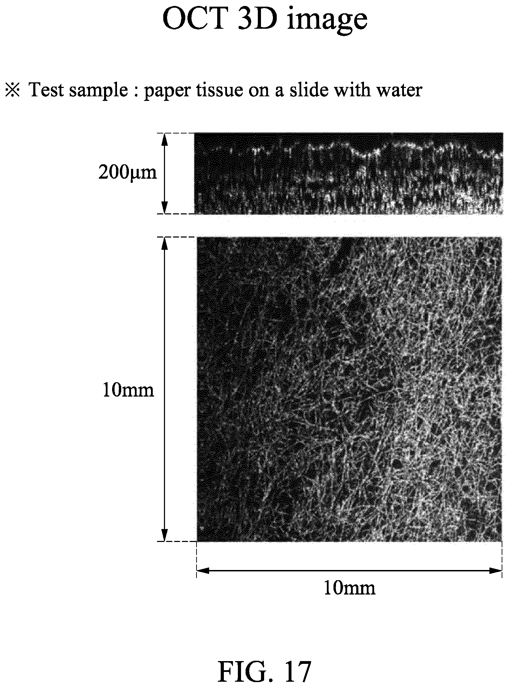

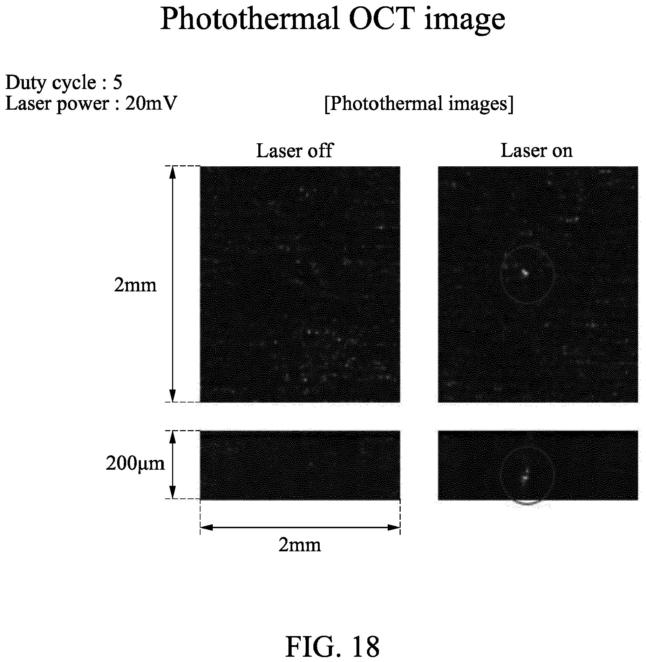

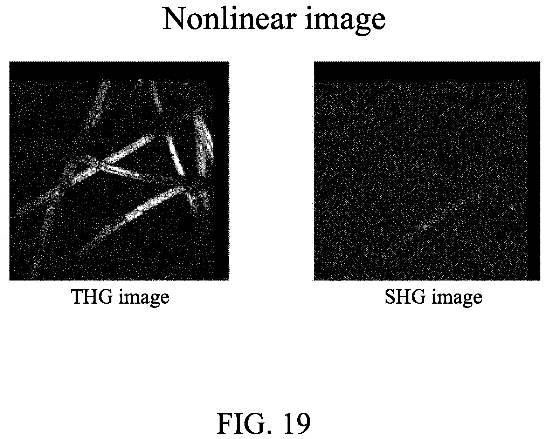

FIG. 17 is a diagram illustrating an optical coherence tomographic image of a sample photographed through an optical coherence microscope module according to an example embodiment, FIG. 18 is a diagram illustrating an optical coherence tomographic image acquired by photographing a photothermal effect generated in a portion of a sample irradiated with a laser pulse, and FIG. 19 a diagram illustrating an SHG image and a THG image of a sample photographed through a nonlinear microscope module.

Referring to FIGS. 17 to 19, an experiment result of photographing a tissue paper through the dual mode microscope system according to an example embodiment may be confirmed.

Referring to FIG. 18, it may be confirmed that a three-dimensional focus position of the nonlinear microscope module may be identified on an optical coherence tomographic image of the tissue paper photographed through the optical coherence microscope module.

Specifically, the left-side image of FIG. 18 may represent an optical coherence tomographic image when power of a light source of the nonlinear microscope module is turned off, and the right-side image of FIG. 18 may represent an optical coherence tomographic image when power is applied to the light source of the nonlinear microscope module.

When both images are compared to each other, it may be confirmed that a local portion of a sample is brightly marked by a photothermal effect on the right-side image in which a laser pulse is irradiated onto the sample through the light source of the nonlinear microscope module.

Accordingly, it may be possible to identify the three-dimensional focus position of the nonlinear microscope module by sensing a portion that is locally deformed by the photothermal effect on the optical coherence tomographic image of the sample.

Referring to FIG. 19, an SHG image and a THG image of a portion of the sample irradiated with the laser pulse in FIG. 18 photographed through the nonlinear microscope module according to an example embodiment may be confirmed.

As a result, it may be possible to acquire the optical coherence tomographic image through the dual mode microscope system according to an example embodiment, and at the same time, it may be possible to accurately and quickly acquire a high-resolution image of a desired point through the nonlinear microscope module.

Although the example embodiments have been described with reference to the limited drawings as described above, various modifications and changes may be made from the foregoing descriptions by those skilled in the art. For example, suitable results can be achieved even if the described techniques are performed in a different order, and/or even if components of the described structure, device, and the like are coupled or combined in a different manner, or are replaced or substituted by other components or their equivalents.

## Claims

1. A dual mode microscope system comprising:
a sample holder configured to support a sample;
an optical coherence microscope module configured to transfer a broadband light toward the sample and a reference mirror, and to form a tomographic image of the sample based on a spectrum image formed by mutual coherence between lights reflected from the sample and the reference mirror; and
a nonlinear microscope module configured to form a nonlinear image of the sample by irradiating a laser pulse toward the sample, and then measuring a light generated through a multiphoton excitation phenomenon.

2. The dual mode microscope system of claim 1, wherein at least a part of a broadband light irradiated by the optical coherence microscope module toward the sample and at least a part of a laser pulse irradiated by the nonlinear microscope module toward the sample are irradiated onto the sample along a same path.

3. The dual mode microscope system of claim 2, wherein the optical coherence microscope module and the nonlinear microscope module share one objective lens.

4. The dual mode microscope system of claim 1, wherein the sample holder is installed between the optical coherence microscope module and the nonlinear microscope module, so that a light emitted from the optical coherence microscope module is irradiated onto one surface of the sample holder, and a light emitted from the nonlinear microscope module is irradiated onto the other surface of the sample holder.

5. The dual mode microscope system of claim 4, wherein the sample holder is movable toward three axes between the optical coherence microscope module and the nonlinear microscope module.

6. The dual mode microscope system of claim 1, wherein the optical coherence microscope module comprises:
a first light source configured to emit a broadband light;
a sample irradiator configured to irradiate a part of a broadband light emitted from the first light source toward the sample, and to receive a light reflected from the sample;
a reference unit configured to reflect a remaining part of the broadband light emitted from the first light source; and
a spectrometer configured to measure a spectrum image formed, after the broadband light is transferred to the sample irradiator and the reference unit, by mutual coherence of a light reflected from each, and
the nonlinear microscope module comprises:
a second light source configured to emit a laser pulse;
a first wavelength separation element installed on an optical axis of the broadband light irradiated from the sample irradiator toward the sample, the first wavelength separation element configured to reflect at least a part of a laser pulse emitted from the second light source toward the sample holder by reflecting a component of a light having a first setting wavelength or more, and transmitting a component of a light having less than the first setting wavelength, and to transmit at least a part of a light reflected after being irradiated onto the sample; and
a photon measurement unit configured to measure a light generated through a multiphoton excitation phenomenon by a laser pulse irradiated onto the sample.

7. The dual mode microscope system of claim 6, further comprising:
a controller configured to form an optical coherence tomographic image of the sample through a spectrum image measured by the spectrometer, and to form a nonlinear image of the sample through a light measured by the photon measurement unit,
wherein the controller senses a locally refracted portion of the optical coherence tomographic image of the sample by heating the sample through a laser pulse emitted from the second light source to sense relative positions of optical axes of a broadband light and a laser pulse irradiated toward the sample.

8. The dual mode microscope system of claim 7, wherein
the sample irradiator comprises a first beam scanner configured to adjust a position of the optical axis of the broadband light irradiated toward the sample,
the nonlinear microscope module further comprises a second beam scanner configured to adjust a position of the optical axis of the laser pulse irradiated toward the sample, and
the controller drives, based on a relative position between central coordinates of the optical coherence tomographic image of the sample and coordinates of a specific portion where the optical coherence tomographic image is locally refracted, at least one scanner of the first beam scanner and the second beam scanner to align an optical axis of a broadband light and an optical axis of a laser pulse irradiated toward the sample.

9. The dual mode microscope system of claim 6, wherein the reference unit comprises:
a beam splitter configured to reflect at least a part of a broadband light irradiated from the sample irradiator toward the sample holder;
a focus adjuster installed on a path of a broadband light reflected from the beam splitter, the focus adjuster configured to adjust an optical path length of a passing light; and
a reference mirror configured to reflect a light passing through the focus adjuster.

10. The dual mode microscope system of claim 9, wherein the focus adjuster comprises:
a plurality of optical path adjustment windows configured to respectively provide different optical path lengths; and
a driver configured to move one optical path adjustment window of the plurality of optical path adjustment windows to be selectively positioned on a path of the broadband light.

11. The dual mode microscope system of claim 6, wherein the photon measurement unit comprises:
a second wavelength separation element configured to transmit a light corresponding to one harmonic generation of a second harmonic generation (SHG) and a third harmonic generation (THG) among components of a light emitted by irradiating the sample with a laser pulse, and to reflect a light corresponding to a remaining harmonic generation;
a first photon measurer configured to measure a harmonic generation transmitting the second wavelength separation element; and
a second photon measurer configured to measure a harmonic generation reflected from the second wavelength separation element.

12. The dual mode microscope system of claim 6, wherein
a broadband light irradiated from the sample irradiator transmits a first wavelength separation element to be irradiated onto a sample holder, and
between the first wavelength separation element and the sample holder, the broadband light and the laser pulse are irradiated onto the sample while forming a common path.

13. The dual mode microscope system of claim 6, wherein
the optical coherence microscope module and the nonlinear microscope module are disposed at positions opposite to each other with respect to the sample holder, and
a broadband light source irradiated from the sample irradiator is vertically irradiated onto one surface of the sample holder, and a laser pulse reflected from the first wavelength separation element is vertically irradiated onto the other surface of the sample holder.

14. A method for controlling a dual mode microscope system, the method for controlling a dual mode microscope system provided with a sample holder for supporting a sample, a nonlinear microscope module for acquiring a nonlinear image of a sample supported on the sample holder, and an optical coherence microscope module for acquiring an optical coherence tomographic image of a sample supported on the sample holder, comprising:
a light source driving operation of heating a specific portion of the sample using a laser pulse irradiated from a light source of the nonlinear microscope module; and
an optical axis alignment operation of aligning, based on a relative position of the specific portion sensed from an optical coherence tomographic image acquired from the optical coherence microscope module, axes of lights generated from respective light sources of the optical coherence microscope module and the nonlinear microscope module, and irradiated onto the sample to be positioned on a straight line.

15. The method for controlling a dual mode microscope system of claim 14, wherein the light source driving operation comprises locally changing an optical coherence tomographic image of the sample using a photothermal effect by irradiating a laser having a periodic pulse form onto the sample through the light source of the nonlinear microscope module.

16. The method for controlling a dual mode microscope system of claim 14, wherein the optical axis alignment operation comprises:
a specific portion sensing operation of calculating position coordinates of the specific portion in the optical coherence tomographic image acquired through the optical coherence microscope module;
a relative position sensing operation of calculating a relative position between central coordinates of the optical coherence tomographic image and the position coordinates of the specific portion; and
an optical axis adjustment operation of aligning an optical axis of one module of the nonlinear microscope module and the optical coherence microscope module based on the relative position.

17. The method for controlling a dual mode microscope system of claim 14, further comprising:
a focus adjustment operation of adjusting a focus of an optical coherence tomographic image by selectively positioning one of a plurality of optical path adjustment windows respectively providing different optical path lengths on a path of a light irradiated from a light source of the optical coherence microscope module toward a reference mirror.
